# EUROPÄISCHE PATENTANMELDUNG

(11) **EP 0 714 206 A2**
(43) Veröffentlichungstag der Anmeldung: **29.05.1996**
(21) Anmeldenummer: 95117910.0
(22) Anmeldetag: 14.11.1995
(51) Int. Cl.: H04N 7/14

(54) **Verfahren zum Prüfen von Signalisierungs-Protokollen von Bildtelefonen**

(30) Priorität: 22.11.1994 DE 4441433
(71) Anmelder: Deutsche Telekom AG, D-53105 Bonn (DE)
(72) Erfinder: Henkel, Friedhelm, D-64285 Darmstadt (DE)

(57) **Zusammenfassung**

Bei einem Verfahren zum Prüfen von Signalisierungs-Protokollen von Bildtelefonen zum Betrieb an einem ISDN ist vorgesehen, daß mit Hilfe einer Prüfeinrichtung, welche gegenüber dem Bildtelefon das Netz und eine Konferenzeinrichtung simuliert, Außer-Band-Signalisierungs-Nachrichten zwischen dem Endgerät und der Prüfeinrichtung ausgetauscht werden und die als Antwort darauf von dem Endgerät eintreffenden Protokollelemente geprüft werden, bis mindestens eine aktive Verbindung zwischen dem Endgerät und der Prüfeinrichtung vorhanden ist. Die Prüfeinrichtung sendet danach In-Band-Signalisierungs-Elemente zu dem Endgerät und prüft die vom Endgerät gesendeten In-Band-Signalisierungs-Elemente, wobei die In-Band-Signalisierungs-Elemente entsprechend dem Funktionsumfang des jeweils zu prüfenden Endgerätes folgende zum Zusammenwirken mit einer Konferenzeinrichtung vorgesehenen Informationen enthalten: sprachgesteuerte Betriebsart, kommandogesteuerte Konferenz, von einem Leiter gesteuerte Konferenz und untergeordneter Status des Endgerätes.

## Beschreibung

Die Erfindung betrifft ein Verfahren zum Prüfen von Signalisierungs-Protokollen von Bildtelefonen zum Betrieb am ISDN.

Bei Endgeräten, die zum Betrieb am ISDN vorgesehen sind, sind zum Zusammenwirken mit dem Netz, insbesondere zum Verbindungsaufbau, Protokolle vorgesehen, die über den D-Kanal übertragen werden und unter anderem Außer-Band-Signalisierungs-Protokolle genannt werden. Zum Zusammenwirken mit einem anderen Endgerät oder einer Konferenzeinrichtung sind innerhalb der Nutzkanäle sogenannte In-Band-Signalisierungs-Protokolle festgelegt. Ein Fehlverhalten eines Endgerätes bezüglich dieser Protokolle kann zu erheblichen Störungen führen. Deshalb ist eine lückenlose Prüfung der Endgeräte bezüglich dieser Protokolle erforderlich. Insbesondere bei Bildtelefonen sind die Protokolle sehr vielfältig, unter anderem durch die Fähigkeit zum Betrieb mit einer Konferenzeinrichtung.

Aufgabe der vorliegenden Erfindung ist es daher, ein Verfahren zum sicheren Prüfen von Signalisierungs-Protokollen von Bildtelefonen zum Betrieb am ISDN vorzuschlagen.

Diese Aufgabe wird erfindungsgemäß dadurch gelöst, daß mit Hilfe einer Prüfeinrichtung, welche gegenüber dem Bildtelefon das Netz und eine Konferenzeinrichtung simuliert, Außer-Band-Signalisierungs-Nachrichten zwischen dem Endgerät und der Prüfeinrichtung ausgetauscht werden und die als Antwort darauf von dem Endgerät eintreffenden Protokollelemente geprüft werden, bis mindestens eine aktive Verbindung zwischen dem Endgerät und der Prüfeinrichtung vorhanden ist, daß die Prüfeinrichtung danach In-Band-Signalisierungs-Elemente zu dem Endgerät sendet und die vom Endgerät gesendeten In-Band-Signalisierungs-Elemente prüft, wobei die In-Band-Signalisierungs-Elemente entsprechend dem Funktionsumfang des jeweils zu prüfenden Endgerätes folgende zum Zusammenwirken mit einer Konferenzeinrichtung vorgesehenen Informationen enthalten:
- sprachgesteuerte Betriebsart,
- kommandogesteuerte Konferenz,
- von einem Leiter gesteuerte Konferenz und
- untergeordneter Status des Endgerätes.

Das erfindungsgemäße Verfahren weist den Vorteil auf, daß reproduzierbare Meßergebnisse erlangt werden. Somit kann den Entwicklern von geprüften Bildtelefonen genaue Auskunft über ein eventuelles Fehlverhalten gegeben werden. Außerdem vermeidet ein zuverlässiges Erkennen von Fehlern vor der Einführung der Bildtelefone weitgehend Reklamationen, Rückrufaktionen und Nachbesserungen. Durch die umfassende Prüfung mit dem erfindungsgemäßen Verfahren werden auch Funktionen überprüft, die sich im praktischen Betrieb möglicherweise erst sehr spät als fehlerhaft ergeben.

Im einzelnen kann bei dem erfindungsgemäßen Verfahren vorgesehen sein, daß bei der Prüfung zur kommandogesteuerten Konferenz In-Band-Signalisierungs-Elemente folgenden Inhalts geprüft werden:
- Übergang zur kommandogesteuerten Betriebsart,
- Übergang zur sprachgesteuerten Betriebsart,
- Anforderung zur Verteilung des Videosignals des jeweils zu prüfenden Endgerätes,
- Bestätigung der Verteilung des Videosignals des jeweils zu prüfenden Endgerätes,
- Ablehnung der Verteilung des Videosignals des jeweils zu prüfenden Endgerätes,
- Auslösung der Verteilung des Videosignals des jeweils zu prüfenden Endgerätes,
- Zurückweisung der Auswahl einer Videosignalquelle und
- Rückkehr zur automatischen Zuteilung der Videosignalquelle.

Ferner ist bei dem erfindungsgemäßen Verfahren vorteilhaft, wenn bei der Prüfung zur von einem Leiter gesteuerten Konferenz In-Band-Signalisierungs-Elemente folgenden Inhalts geprüft werden:
- Anforderung der Anzeige und Anzeige der mit der Konferenzeinrichtung verbundenen Endgeräte,
- Anforderung nach der Steuerung durch den Leiter, akzeptiert und zurückgewiesen,
- Auslösung der Steuerung durch den Leiter,
- Rückkehr zur Sprachsteuerung,
- Anzeige der Videosignalquelle,
- Anforderung zur Worterteilung, bei einem normalen Endgerät,
- Anzeige der Anforderung der Worterteilung beim Leiter,
- Worterteilung durch den Leiter,
- Entfernen eines Endgerätes aus der Konferenz durch den Leiter und
- Beenden der Konferenz durch den Leiter.

Eine Weiterbildung des erfindungsgemäßen Verfahrens besteht darin, daß die Reihenfolge der einzelnen Prüfungen programmgesteuert ist, daß Prüfungen von bei der Prüfeinrichtung eintreffenden Protokollen automatisch vorgenommen werden und daß von der Prüfeinrichtung Anweisungen zur Bedienung des Endgerätes sowie zum Ablesen von Anzeigen am Endgerät und zur Eingabe von Ableseergebnissen in die Prüfeinrichtung ausgegeben werden.

Diese Weiterbildung sichert die Vollständigkeit der Prüfung und ermöglicht die Einbeziehung von nicht automatisch zu erfassenden Fehlern mit Hilfe einer Bedienperson.

Ein Ausführungsbeispiel der Erfindung ist in der Zeichnung anhand mehrerer Figuren dargestellt und in der nachfolgenden Beschreibung näher erläutert. Es zeigen:
- Fig. 1 bis Fig. 21: jeweils Verfahrensschritte des erfindungsgemäßen Verfahrens und
- Fig. 22: eine schematische Darstellung einer Prüfeinrichtung zur Durchführung des erfindungsgemäßen Verfahrens.

Die Prüfung als solche läuft nach einem vorgegebenen Programm ab, wobei die vom Endgerät empfangenen Protokolle in der Prüfeinrichtung automatisch geprüft werden und eine Prüfung des Endgerätes weitgehend dadurch erfolgt, daß in der Prüfeinrichtung die vom Endgerät erhaltenen Protokolle (Kommandos, Parameter und andere Angaben) als Reaktion auf zuvor dem Endgerät von der Prüfeinrichtung zugeleitete Kommandos ausgewertet werden.

Weitere Prüfungen erfordern die Tätigkeit einer mit der Durchführung der Prüfung beauftragten Person (Prüfer). Dieses kann dadurch erfolgen, daß der Prüfer am Endgerät einen Bedienvorgang vornimmt und die Prüfeinrichtung das danach an dem Endgerät empfangene Protokoll prüft. Das erfindungsgemäße Verfahren umfaßt jedoch auch Prüfschritte, bei denen die Prüfeinrichtung Protokolle an das Endgerät sendet, die eine Anzeige auf dem Endgerät zur Folge haben.

Diese ist dann vom Prüfer zu beobachten und das Ergebnis durch eine Eingabe an der Prüfeinrichtung zu dokumentieren. Die zur Mitwirkung des Prüfers erforderlichen Handlungen können auf einem Bildschirm der Prüfeinrichtung angezeigt werden. Visuelle Meßparameter können eingegeben werden, damit am Ende automatisch ein Meßprotokoll erstellt werden kann.

Insbesondere die automatisch von der Prüfeinrichtung vorgenommenen Prüfungen sind in den folgenden Erläuterungen nicht immer erwähnt, da dieses sich häufig aus dem Zusammenhang ergibt. So ist beispielsweise ein erfolgreich abgeschlossener Verbindungsaufbau zwischen dem Endgerät und der Prüfeinrichtung das Ergebnis erfolgreicher Prüfungen der einzelnen Schritte hierzu.

Bei der Darstellung der einzelnen Verfahrensschritte ist jeweils links die Prüfeinrichtung und rechts das Bildtelefon - im folgenden auch Endgerät genannt - dargestellt. Einfache Pfeile deuten auf eine Außer-Band-Signalisierung hin, das heißt, eine Signalisierung, die beim Betrieb des Endgerätes zwischen dem Netz und dem Endgerät abläuft und im wesentlichen zum Verbindungsaufbau bzw. zur Auslösung der Verbindung dient. Bei der Durchführung des erfindungsgemäßen Verfahrens wird das Netz von der Prüfeinrichtung simuliert.

Breite Pfeile stellen eine In-Band-Signalisierung dar, die innerhalb der ersten Verbindung (Initial Connection) übertragen wird und im Betriebsfall der Signalisierung zwischen zwei über das Netz verbundenen Endgeräten dient. Beim Betrieb an einer Konferenzeinrichtung findet die In-Band-Signalisierung zwischen der Konferenzeinrichtung (MCU = Multipoint Contol Unit) und den damit verbundenen Endgeräten statt. Bei dem erfindungsgemäßen Verfahren wird eine Konferenzeinrichtung ebenfalls von der Prüfeinrichtung simuliert.

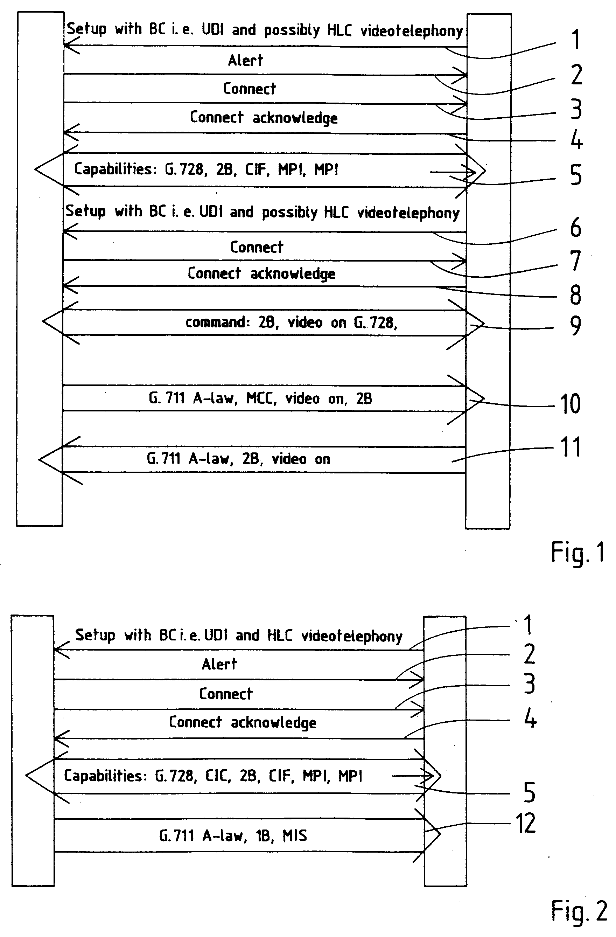

Bei den in Fig. 1 dargestellten Schritten wird zunächst bei 1 von dem Endgerät eine Set-up-Nachricht an die Prüfeinrichtung geschickt, die unter anderem die Anforderung an den Übertragungskanal BC (Bearer Capability) enthält, beispielsweise das Informations-Element UDI (Unrestricted Digital Information) und HLC (High Layer Compatibility) für den Betrieb als Bildtelefon. Dieses wird von der Prüfeinrichtung bei 2 mit der Meldung Alert beantwortet, was eine Bestätigung der eingetroffenen Set-up-Nachricht darstellt. Wird dann an der Prüfeinrichtung eine entsprechende Bedieneingabe vorgenommen, sendet sie bei 3 eine CONNECT-Nachricht, was vom Endgerät bei 4 bestätigt wird, womit eine erste aktive Verbindung geschaltet ist. Daraufhin tauschen die Prüfeinrichtung und das Endgerät innerhalb der In-Band-Signalisierung Protokolle 5 über die bestehenden Fähigkeiten (Capabilities) aus - in diesem Fall, daß die Audio-Norm G.728 verwendet werden soll, daß ein zweiter Nutzkanal benutzbar ist und daß die Videoübertragung mit den durch CIF, MPI, MPI gegebenen Parametern erfolgen soll.

Nach den bisher beschriebenen Verfahrensschritten 1 bis 4 zum Schalten der ersten aktiven Verbindung erfolgt ein ähnlicher Vorgang für den weiteren Nutzkanal (weitere aktive Verbindung) mit den Verfahrensschritten 6 bis 8, worauf bei 9 jeweils von der Prüfeinrichtung und vom Endgerät ein Kommando gesendet wird, wonach beide B-Kanäle für Video und für Audio nach der Norm G.728 benutzt werden.

Um die Umschaltung auf symmetrischen Audiobetrieb während der Konferenz zu überprüfen, wird bei 10 von der Prüfeinrichtung dem Endgerät G.711, A-law, MCC, Video-on signalisiert, das bei 11 beantwortet wird.

Mit den in Fig. 2 dargestellten Schritten wird geprüft, ob das Endgerät den sogenannten Sekundärstatus nach einem entsprechenden Kommando einnimmt. Dazu erfolgt zunächst in den Schritten 1 bis 4 die Aktivierung der ersten Verbindung vom Endgerät und ein Austausch der Fähigkeiten 5. Danach sendet bei 12 die Prüfeinrichtung unter anderem das Kommando MIS (Multipoint Indication Secondary). Bei ordnungsgemäßem Zustand beginnt das Endgerät nicht mit dem Aktivieren der weiteren Verbindung, obwohl es dazu in der Lage wäre. Es sendet keinen "Video-on" Befehl. Neben dem Kommando MIS sendet die Prüfeinrichtung einen reduzierten Fähigkeitensatz mit mindestens der Audio-Fähigkeit (Audio Capability).

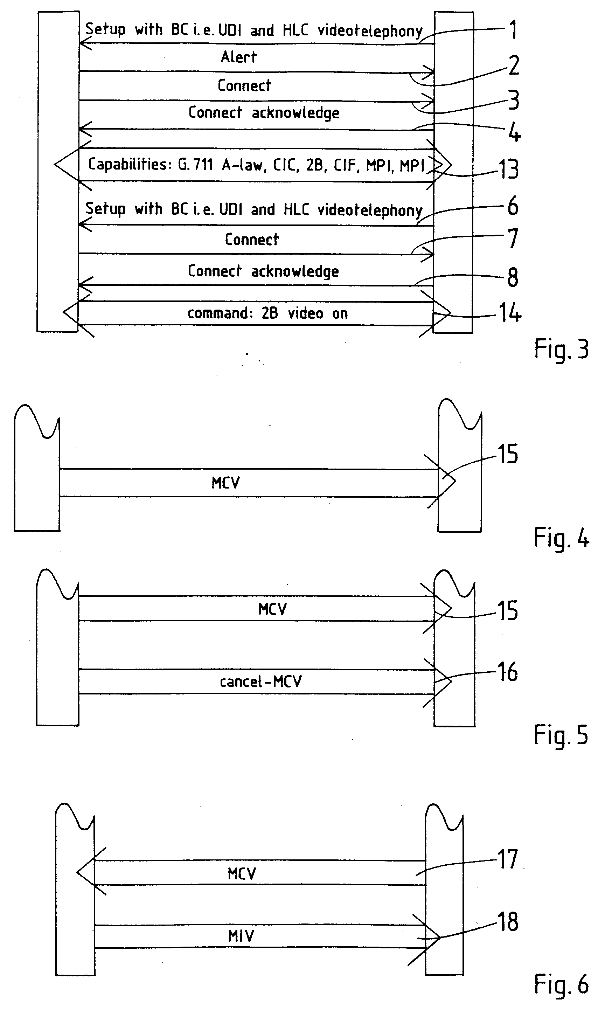

Die Figuren 3 bis 10 stellen Prüfschritte für eine Konferenz dar, bei welcher die Verteilung der Videosignale von Kommandos abhängt (Command Switched Conference). Bei der Prüfung gemäß Fig. 3 erfolgt der Aufbau der ersten und weiteren Verbindung mit Hilfe der Schritte 1 bis 4 und 7 bis 8 in der gleichen Weise wie bei Fig. 1. Der Prüfschritt kann auch mit einer Verbindung durchgeführt werden. Beim Austauschen der Fähigkeiten bei 13 wird jedoch ein Signal CIC (Chair-controlled Indication Capability) gesendet. Dem Endgerät ist damit angezeigt, daß eine über Kommandos oder einen Vorsitzenden gesteuerte Konferenz möglich ist.

Fig. 4 zeigt einen Übergang zur durch Kommando geschalteten Betriebsart (Command Switched Mode). Dazu sendet die Prüfeinrichtung ein Kommando MCV (Multipoint Command Visual) 15 an das Endgerät. Das Endgerät gibt dann dem Benutzer eine Information, daß jetzt die Steuerung der Verteilung der Videosignale über Kommandos erfolgt. Bei dem in Fig. 5 dargestellten Übergang zur sprachgesteuerten Betriebsart sendet die Prüfeinrichtung ein Kommando "Cancel-MCV" 16 zum Endgerät. Daraufhin gibt das Endgerät dem Benutzer eine Information, daß die Betriebsart der Konferenzeinrichtung auf sprachgesteuert umgeschaltet wurde. Beide Anzeigen werden von der mit der Prüfung beauftragten Person beobachtet und in geeigneter Weise dokumentiert.

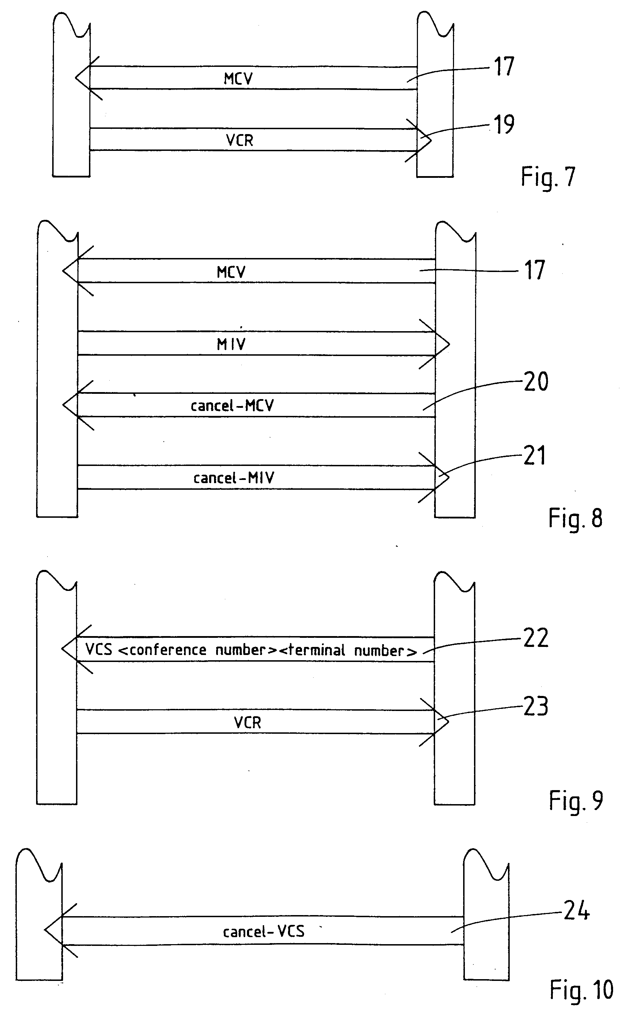

Anhand der Figuren 6 und 7 werden Schritte erläutert, welche die Protokolle prüfen, die zur Übertragung einer Anforderung an die Konferenzeinrichtung zur Verteilung der von dem Endgerät gesendeten Videosignale auf die anderen Teilnehmer der Konferenz bewirken sollen. Auf eine entsprechende Bedieneingabe sendet das Endgerät bei 17 ein Kommando MCV an die Prüfeinrichtung. Auf dieses Kommando sind zwei Reaktionen der Konferenzeinrichtung möglich, nämlich die Verteilung der Videosignale an die anderen Teilnehmer oder eine Zurückweisung dieser Anfrage. Zur Simulation des ersten Falls sendet die Prüfeinrichtung bei 18 ein Signal MIV (Multipoint Indication Visual) an das Endgerät. Der Prüfer hat dann eine entsprechende Anzeige am Endgerät zu überprüfen. Im weiteren Verlauf der Prüfung wird auf das Kommando MCV von der Prüfeinrichtung bei 19 mit einem Kommando VCR (Video Command Rejected) geantwortet, worauf das Endgerät dieses ebenfalls dem Benutzer bzw. Prüfer anzeigt.

Mit den anhand von Fig. 8 erläuterten Schritten werden die Kommandos und Meldungen im Zusammenhang mit der Auslösung der Verteilung der Videosignale geprüft. Dazu wird nach einem vom Endgerät gesendeten Kommando MCV und der Bestätigung MIV durch die Prüfeinrichtung veranlaßt, durch eine entsprechende Bedieneingabe des Prüfers vom Endgerät ein Kommando Cancel-MCV 20 zur Prüfeinrichtung zu senden. Diese registriert, ob das Kommando richtig gesendet wurde und antwortet mit einem Cancel-MIV bei 21, worauf der Prüfer am Endgerät beobachtet, ob das Endgerät das Eintreffen dieses Kommandos richtig anzeigt.

Gemäß Fig. 9 wird geprüft, ob das Endgerät in der Lage ist, ein korrektes Kommando VCS (Video Command Selected) zur Auswahl eines anderen Konferenzteilnehmers zu senden, dessen Videosignal dem Endgerät zugeführt werden soll. Auf eine entsprechende Bedieneingabe des Prüfers hin sendet das Endgerät bei 22 VCS einschließlich der Konferenznummer und der Endgerätenummer, von welchem das Videosignal empfangen werden soll. Die Prüfeinrichtung prüft dieses Kommando und antwortet mit der Meldung VCR bei 23. Daraufhin kann der Prüfer am Endgerät wiederum beobachten, ob eine Zurückweisung der Auswahl der Videosignalquelle am Endgerät angezeigt wird.

Nach der Auswahl einer Videosignalquelle am Endgerät kann durch eine andere Bedieneingabe eine Rückkehr zur automatischen Auswahl der Videosignalquelle bewirkt werden. Dieses wird gemäß Fig. 10 dadurch geprüft, daß der Prüfer die Bedieneingabe vornimmt und die Prüfeinrichtung bei 24 die Abgabe des Signals Cancel-VCS überwacht.

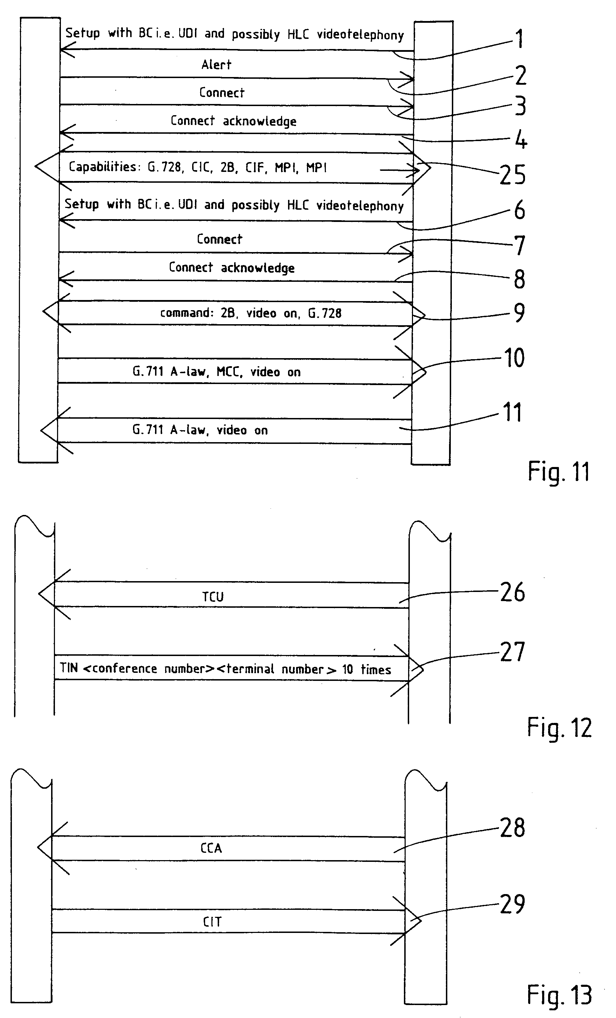

Wie bei herkömmlichen Konferenzen kann auch bei Konferenzeinrichtungen für Bildtelefone ein Leiter (Vorsitzender, Chairman) bestimmt werden, der den anderen Teilnehmern das Wort erteilt und deren Videosignale verteilen läßt. Die im folgenden beschriebenen Prüfschritte dienen zur Prüfung eines Endgerätes mit den für eine Konferenzleitung erforderlichen Funktionalitäten. Vor Durchführung von einzelnen Prüfschritten erfolgt eine Aktivierung der ersten und der weiteren Verbindung zwischen Prüfeinrichtung und Endgerät gemäß Fig. 11. Der Ablauf ist ähnlich wie bei Fig. 1, so daß eine vollständige Beschreibung nicht erforderlich ist. Zusätzlich wird jedoch von der Prüfeinrichtung das Kommando CIC (Chair Control Indication Capability) gesendet (25).

Nachdem sowohl die Prüfeinrichtung als auch das Endgerät bei 10 bzw. 11 das Kommando Video-on gesendet haben, wird für einige Tests zusätzlich eine Liste der Konferenzteilnehmer im Endgerät benötigt. Diese kann gemäß Fig. 12 vom Endgerät durch ein Kommando TCU (Terminal Command Up-date) 26 von der Konferenzeinrichtung bzw. von der Prüfeinrichtung abgefragt werden. Diese sendet dann TIN (Terminal Indication Number) gefolgt von der Konferenznummer und Endgerätenummern von beispielsweise bis zu zehn Teilnehmern. Der Prüfer kann dann auf einem Display des Endgerätes die Nummern oder gegebenenfalls Namen ablesen und diesen Prüfschritt abhaken.

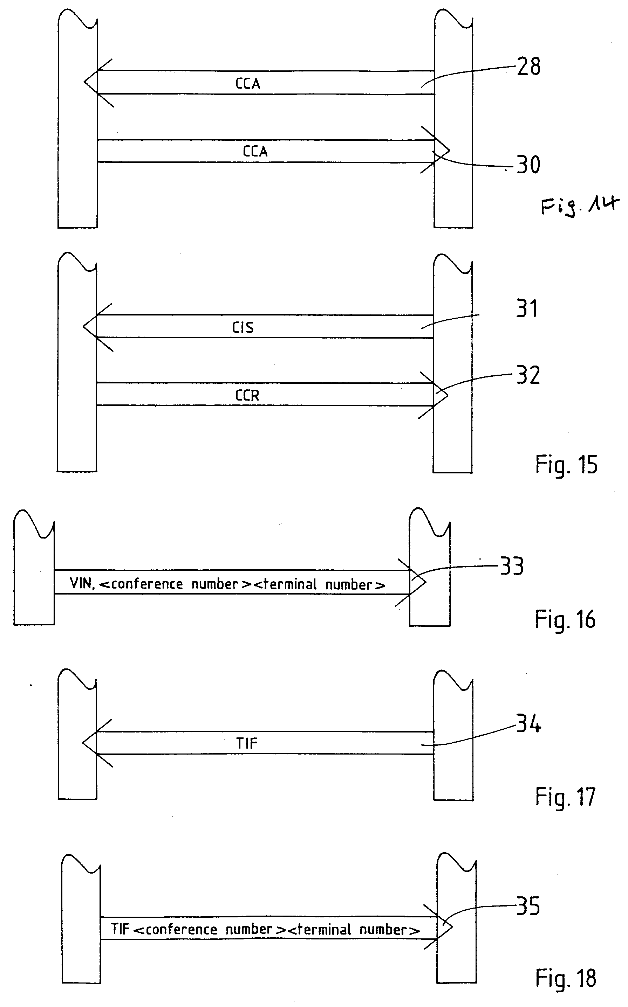

Um die Funktion des Leiters an das Endgerät heranzuziehen, wird gemäß Fig. 13 nach einer entsprechenden Bedieneingabe das Kommando CCA (Chair Command Aquire) 28 an die Prüfeinrichtung geleitet. Erkennt die Prüfeinrichtung dieses Kommando richtig, sendet es CIT (Chair Indication Token) bei 29 an das Endgerät, was dieses dem Prüfer anzeigt. Sendet jedoch die Prüfeinrichtung gemäß Fig. 14 auf ein Kommando CCA (Chair Command Aquire) ein Kommando CCA bei 30 zurück, bedeutet dieses, daß die Anforderung nach der Funktion des Leiters zurückgewiesen wurde und wird vom Endgerät entsprechend angezeigt. Auch dieses nimmt der Prüfer zur Kenntnis und dokumentiert es.

Ein ursprünglich die Funktion des Leiters aufweisendes Endgerät kann diese Funktion abgeben, in dem es CIS (Chair Indication Stopped) an die Konferenzeinrichtung bzw. bei der Prüfung an die Prüfeinrichtung bei 31 sendet. Versteht die Prüfeinrichtung das Kommando CIS richtig, reagiert sie mit CCR (Chair Command Release) bei 32, was im Endgerät ebenfalls angezeigt und vom Prüfer überprüft wird.

Bei dem in Fig. 16 dargestellten Prüfschritt wird von der Prüfeinrichtung eine Zeichenkette VIN (Video Indication Number) 33 einschließlich der Nummer der Konferenz und der Endgeräte an das Endgerät gesendet. Im Endgerät des Leiters wird dann auf dem Display die Darstellung des Teilnehmers hervorgehoben, beispielsweise durch eine geeignete Farbe. Dieses ist dann ebenfalls vom Prüfer visuell zu überprüfen und zu dokumentieren.

Die im folgenden erläuterten Schritte dienen zur Prüfung der Protokolle bezüglich von Anfragen auf Erteilung des Wortes. Dazu betätigt der Benutzer eine Taste am Endgerät, worauf dieses bei 34 eine Zeichenkette TIF (Terminal Indication Floor Request) an die Prüfeinrichtung sendet.

Aufgrund der Anforderung 34 (Fig. 17) sendet die Konferenzeinrichtung diese Anfrage TIF an das Endgerät des Leiters. Um auch ein Endgerät in dieser Funktion zu überprüfen, wird gemäß Fig. 18 bei 35 TIF mit der Konferenznummer und der Teilnehmernummer des anfragenden Teilnehmers an das Endgerät gesendet. Der Prüfer kann die entsprechende Anzeige auf dem Endgerät überprüfen und dokumentieren.

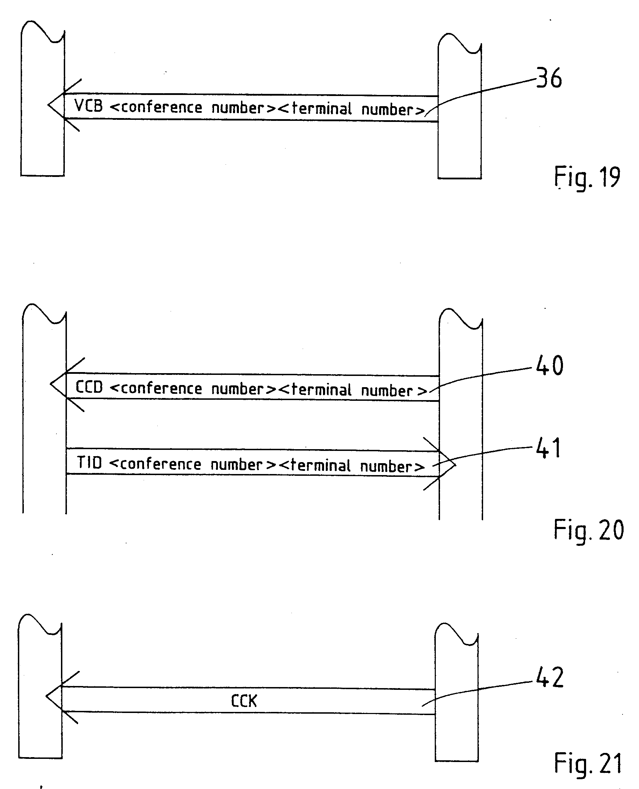

In dem nächsten in Fig. 19 dargestellten Schritt erteilt der Leiter dem anfragenden Teilnehmer das Wort. Nach einer entsprechenden Bedieneingabe wird bei 36 das Kommando VCB (Video Command Broadcast) zusammen mit der Konferenznummer und der Teilnehmernummer an die Prüfeinrichtung geleitet, welche die Richtigkeit dieser Zeichenkette überprüft.

Vom Endgerät des Leiters kann ferner ein Teilnehmer aus der Konferenz entfernt werden. Dazu sendet das Endgerät nach einer entsprechenden Bedieneingabe das Kommando CCD (Chair Control Disconnect) mit den Parametern Konferenznummer und Teilnehmernummer bei 40 (Fig. 20) an die Prüfeinrichtung. Erkennt die Prüfeinrichtung den Inhalt dieser Zeichenkette, antwortet sie mit TID (Terminal Indication Dropped) mit den Parametern Konferenznummer und Teilnehmernummer bei 41 an das Endgerät. Der Prüfer beobachtet dann, ob sich eine entsprechende Anzeige des Teilnehmers geändert hat und dokumentiert dieses.

Schließlich wird mit dem erfindungsgemäßen Verfahren überprüft, ob von dem Endgerät des Leiters ein Ende der Konferenz veranlaßt werden kann. Dazu wird nach einer entsprechenden Bedieneingabe vom Endgerät das Kommando CCK bei 42 an die Prüfeinrichtung gesendet, welche dieses Kommando analysiert.

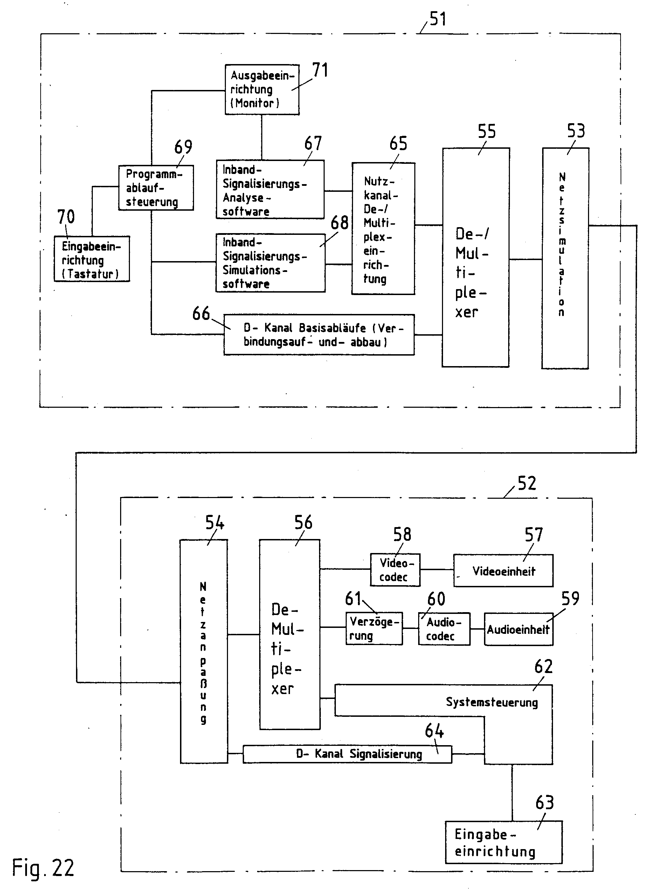

Fig. 22 stellt schematisch ein Ausführungsbeispiel einer Prüfeinrichtung 51 dar, die mit einem Endgerät 52 zusammengeschaltet ist. Sowohl in der Prüfeinrichtung 51 als auch im Endgerät 52 sind eine Netzsimulation 53 bzw. eine Netzanpassung 54 und jeweils ein De-/Multiplexer 55, 56 vorgesehen. Letztere teilen die jeweils ankommenden Signale in die Nutzkanäle und den Datenkanal auf bzw. fügen diese Kanäle zu einem Multiplexsignal zusammen.

Im Endgerät 52 ist eine Videoeinheit 57 über einen Videocodec 58 an den De-/Multiplexer 56 angeschlossen. Die Videoeinheit 57 enthält unter anderem eine Kamera und einen Monitor. Ferner ist eine Audioeinheit 59 über einen Audiocodec 60 und über eine Verzögerungseinrichtung 61 an den De-/Multiplexer 56 angeschlossen. Die Verzögerungseinrichtung 61 dient zur zeitlichen Anpassung der Audiosignale an die durch den Videocodec 58 bedingte Laufzeit der Videosignale.

Zur Steuerung des Endgerätes 52 ist in an sich bekannter Weise eine Systemsteuerung 62 vorgesehen, die mit einer Eingabeeinrichtung 63 und über eine Schaltung 64 zur D-Kanal-Signalisierung mit der Netzanpassung 54 verbunden ist.

In der Prüfeinrichtung 51 schließt sich an den De-/Multiplexer 55 eine Nutzkanal-De-/Multiplexeinrichtung 65 an. Zum Senden und Empfangen der über den D-Kanal übertragenen Signalisierung für die Basisabläufe ist eine Schaltung 66 vorgesehen. Die Erzeugung bzw. Auswertung von Signalen, welche den Schaltungen 65, 66 zugeführt bzw. entnommen werden, erfolgt mit Hilfe eines Computers. Für diesen sind stellvertretend in Fig. 22 drei Funktionsblöcke, nämlich die In-Band-Signalisierungs-Analysesoftware 67, die In-Band-Signalisierungs-Simulationssoftware 68 und die Programmablaufsteuerung 69, dargestellt.

Der Programmablaufsteuerung 69 können über eine Eingabeeinrichtung 70 Kommandos und Daten, beispielsweise Ableseergebnisse, zugeführt werden. Eine Ausgabeeinrichtung 71, beispielsweise ein Monitor, zeigt dem Prüfer den Fortgang des Prüfverfahrens, die jeweils vorhandenen Ergebnisse und gegebenenfalls Aufforderungen an, welche Bedienvorgänge oder welche Ablesungen vorzunehmen sind. Zu Dokumentationszwecken kann auch ein Drucker an die Prüfeinrichtung 51 angeschlossen werden.

## Patentansprüche

1. Verfahren zum Prüfen von Signalisierungs-Protokollen von Bildtelefonen zum Betrieb an einem ISDN, dadurch gekennzeichnet,
- daß mit Hilfe einer Prüfeinrichtung, welche gegenüber dem Bildtelefon das Netz und eine Konferenzeinrichtung simuliert, Außer-Band-Signalisierungs-Nachrichten zwischen dem Endgerät und der Prüfeinrichtung ausgetauscht werden und die als Antwort darauf von dem Endgerät eintreffenden Protokollelemente geprüft werden, bis mindestens eine aktive Verbindung zwischen dem Endgerät und der Prüfeinrichtung vorhanden ist,
- daß die Prüfeinrichtung danach In-Band-Signalisierungs-Elemente zu dem Endgerät sendet und die vom Endgerät gesendeten In-Band-Signalisierungs-Elemente prüft, wobei die In-Band-Signalisierungs-Elemente entsprechend dem Funktionsumfang des jeweils zu prüfenden Endgerätes folgende zum Zusammenwirken mit einer Konferenzeinrichtung vorgesehenen Informationen enthalten:
- sprachgesteuerte Betriebsart,
- kommandogesteuerte Konferenz,
- von einem Leiter gesteuerte Konferenz und
- untergeordneter Status des Endgerätes.

2. Verfahren nach Anspruch 1, dadurch gekennzeichnet, daß bei der Prüfung zur kommandogesteuerten Konferenz In-Band-Signalisierungs-Elemente folgenden Inhalts geprüft werden:
- Übergang zur kommandogesteuerten Betriebsart,
- Übergang zur sprachgesteuerten Betriebsart,
- Anforderung zur Verteilung des Videosignals des jeweils zu prüfenden Endgerätes,
- Bestätigung der Verteilung des Videosignals des jeweils zu prüfenden Endgerätes,
- Ablehnung der Verteilung des Videosignals des jeweils zu prüfenden Endgerätes,
- Auslösung der Verteilung des Videosignals des jeweils zu prüfenden Endgerätes,
- Zurückweisung der Auswahl einer Videosignalquelle und
- Rückkehr zur automatischen Zuteilung der Videosignalquelle.

3. Verfahren nach Anspruch 1, dadurch gekennzeichnet, daß bei der Prüfung zur von einem Leiter gesteuerten Konferenz In-Band-Signalisierungs-Elemente folgenden Inhalts geprüft werden:
- Anforderung der Anzeige und Anzeige der mit der Konferenzeinrichtung verbundenen Endgeräte,
- Anforderung nach der Steuerung durch den Leiter, akzeptiert und zurückgewiesen,
- Auslösung der Steuerung durch den Leiter,
- Rückkehr zur Sprachsteuerung,
- Anzeige der Videosignalquelle,
- Anforderung zur Worterteilung, bei einem normalen Endgerät,
- Anzeige der Anforderung der Worterteilung beim Leiter,
- Worterteilung durch den Leiter,
- Entfernen eines Endgerätes aus der Konferenz durch den Leiter und
- Beenden der Konferenz durch den Leiter.

4. Verfahren nach einem der vorhergehenden Ansprüche; dadurch gekennzeichnet, daß die Reihenfolge der einzelnen Prüfungen programmgesteuert ist, daß Prüfungen von bei der Prüfeinrichtung eintreffenden Protokollen automatisch vorgenommen werden und daß von der Prüfeinrichtung Anweisungen zur Bedienung des Endgerätes sowie zum Ablesen von Anzeigen am Endgerät und zur Eingabe von Ableseergebnissen in die Prüfeinrichtung ausgegeben werden.
